# EUROPEAN PATENT APPLICATION

(11) **EP 4 768 235 A1**
(43) Date of publication of application: **01.07.2026**
(21) Application number: 25226941.0
(22) Date of filing: 23.12.2025
(51) Int. Cl.: B29C 70/54, B28B 17/00, B29C 70/38

(54) **MAINTAINING WORKABILITY OF A CERAMIC MATRIX COMPOSITE MATERIAL IN A FORMING AREA**

(30) Priority: 30.12.2024 US 202419005212
(71) Applicant: The Boeing Company, Arlington, VA 22202 (US)
(72) Inventor: Wienhold, Erik Nicholas, Arlington, 22202 (US); Smith, Brian James, Arlington, 22202 (US); Zmeu, Sandra Louise, Arlington, 22202 (US); Brown, Christopher Robert, Arlington, 22202 (US); Fritzke, Ricardo Andreas, Arlington, 22202 (US); Heng, Sangvavann, Arlington, 22202 (US); Salama, Merna Essam, Arlington, 22202 (US); Johnson, Brice Aaron, Arlington, 22202 (US); Zgherea, Lisa C., Arlington, 22202 (US)
(74) Representative: Arnold & Siedsma

(57) **Abstract**

A forming area for automated composite processing and methods of maintaining workability of a ceramic matrix composite material in a forming area are presented. It is determined if a humidity within the forming area is in a desired range. In response to a determination that the humidity is not in the desired range, at least one of a heater or a humidifier is activated by an environmental controller to maintain a desired humidity for forming the ceramic matrix composite material within the forming area.

## Description

### STATEMENT OF U.S. GOVERNMENT INTEREST

This invention was made with Government support under contract number AFRL ManTech FA2394-23-C-B006 awarded by Department of Defense. The government has certain rights in this invention.

### BACKGROUND INFORMATION

### 1. Field:

The present disclosure relates generally to composite manufacturing and more specifically to maintaining workability of composite materials.

### 2. Background:

It is desirable to automate as many composite manufacturing steps as possible. Currently, peeling protective films from composite materials and placing the composite materials present challenges for automation.

Therefore, it would be desirable to have a method and apparatus that takes into account at least some of the issues discussed above, as well as other possible issues. For example, it would be desirable to improve automated composite placement.

### SUMMARY

An example of the present disclosure provides a forming area for automated composite processing. The forming area for automated composite processing comprises physical boundaries defining and enclosing the forming area, the physical boundaries configured to substantially reduce transmission of a temperature and a humidity from the forming area; a humidity sensor configured to detect the humidity in the forming area; a thermostat configured to detect the temperature in the forming area; and an environmental controller configured to perform at least one of activating or deactivating a heater or a humidifier based on data received from the humidity sensor and the thermostat.

The forming area may further comprise a tracking system configured to document a time a composite material, such as a ceramic matrix composite material, is exposed to the humidity and temperature in the forming area. The tracking system may comprise an RFID antenna gate and an RFID tag. The forming area may further comprise a robotic end effector configured to pick and place a composite material, such as a ceramic matrix composite material, in the forming area. The forming area may further comprise a freezer configured to store composite material, such as ceramic matrix composite material, in the forming area. The forming area may further comprise a heater and a humidifier. The physical boundaries may comprise at least one of walls, drapes, or a tent. The forming area may further comprise an air conditioner.

Another example of the present disclosure provides a method of maintaining workability of a ceramic matrix composite material in a forming area. It is determined if a humidity within the forming area is in a desired range. In response to a determination that the humidity is not in the desired range, at least one of a heater or a humidifier is activated by an environmental controller to maintain a desired humidity for forming the ceramic matrix composite material within the forming area.

The method may further comprise determining if a temperature within the forming area is in a desired range, and in response to a determination that the temperature is not in the desired range, activating, by an environmental controller, at least one of a heater or an air conditioner in the forming area to maintain a desired temperature for forming the ceramic matrix composite material within the forming area. The method may further comprise determining the desired range of humidity based on a type of ceramic matrix composite material within the forming area. Determining the desired range of humidity may further comprise determining the desired range of humidity based on an exposure time of the ceramic matrix composite material to the humidity of the forming area. The method may further comprise detecting a tracker on the ceramic matrix composite material in the forming area and logging a time of detection of the tracker in response to detecting the tracker. The method may further comprise determining an exposure time of the ceramic matrix composite material based on the time of detection, wherein determining the desired range of humidity comprises determining the desired range of humidity based on the exposure time. The method may further comprise determining a desired range of humidity based on a current processing step for a ceramic matrix composite material in the forming area.

Yet another example of the present disclosure provides a method of maintaining workability of a ceramic matrix composite material in a forming area. An exposure time of a ceramic matrix composite material in the forming area is determined. A humidity in the forming area is modified based on the exposure time of the ceramic matrix composite material.

Modifying the humidity in the forming area based on the exposure time of the ceramic matrix composite material may comprise modifying the humidity in the forming area to a desired peel humidity for removing a protective film from the ceramic matrix composite material. Modifying the humidity in the forming area based on the exposure time of the ceramic matrix composite material may comprise modifying the humidity in the forming area to a desired workability for placing the ceramic matrix composite material onto a layup tool. Modifying the humidity in the forming area may comprise activating a humidifier by an environmental controller in communication with a humidity sensor and the humidifier. The method may further comprise modifying a temperature in the forming area based on the exposure time of the ceramic matrix composite material. The method may further comprise detecting a tracker on the ceramic matrix composite material in the forming area, logging a time of detection of the tracker in response to detecting the tracker, and determining an exposure time of the ceramic matrix composite material based on the time of detection, wherein determining the desired range of humidity comprises determining the desired range of humidity based on the exposure time and/or the time of detection.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a forming area in accordance with an illustrative example;
**Figure 4** is a flowchart of a method of maintaining workability of a ceramic matrix composite material in a forming area in accordance with an illustrative example;
**Figure 5** is a flowchart of a method of maintaining workability of a ceramic matrix composite material in a forming area in accordance with an illustrative example;
**Figure 6** is an illustration of an aircraft manufacturing and service method in a form of a block diagram in accordance with an illustrative example; and
**Figure 7** is an illustration of an aircraft in a form of a block diagram in which an illustrative example may be implemented.

### DETAILED DESCRIPTION

The illustrative examples recognize and take into account several considerations. For example, the illustrative examples recognize that composite material is held in a freezer until it is to be processed. The illustrative examples recognize and take into account that the composite material is removed from the freezer and allowed to thaw to decrease matrix viscosity prior to forming the composite material. The illustrative examples recognize and take into account that water-based Ceramic Matrix Composite material is extremely sensitive to humidity, temperature, and time of exposure to the environment (out of freezer).

The illustrative examples recognize and take into account that it can become difficult to form and work the CMC composite when it dries out and is not maintained at a desired humidity and temperature range. The illustrative examples provide monitoring and adjusting the humidity and temperature to improve reliability of automated film peeling and formability of material. In some illustrative examples, a working temperature is about 21 degrees Celsius (about 70 degrees Fahrenheit) and 60-65% humidity.

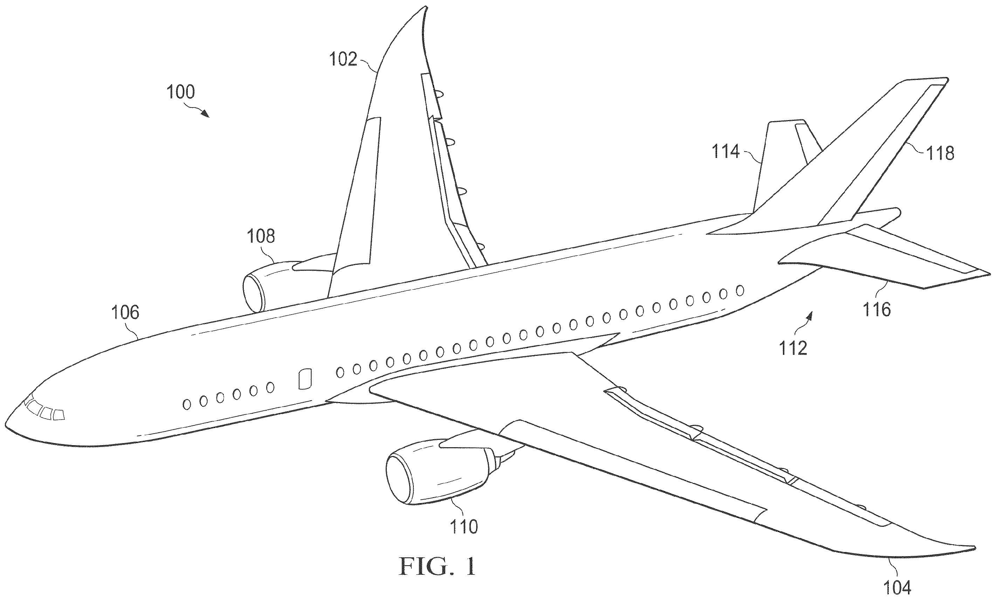

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have components formed using the illustrative examples. A portion of at least one of wing **102,** wing **104,** or body **106** can be formed by maintaining workability according to the illustrative examples.

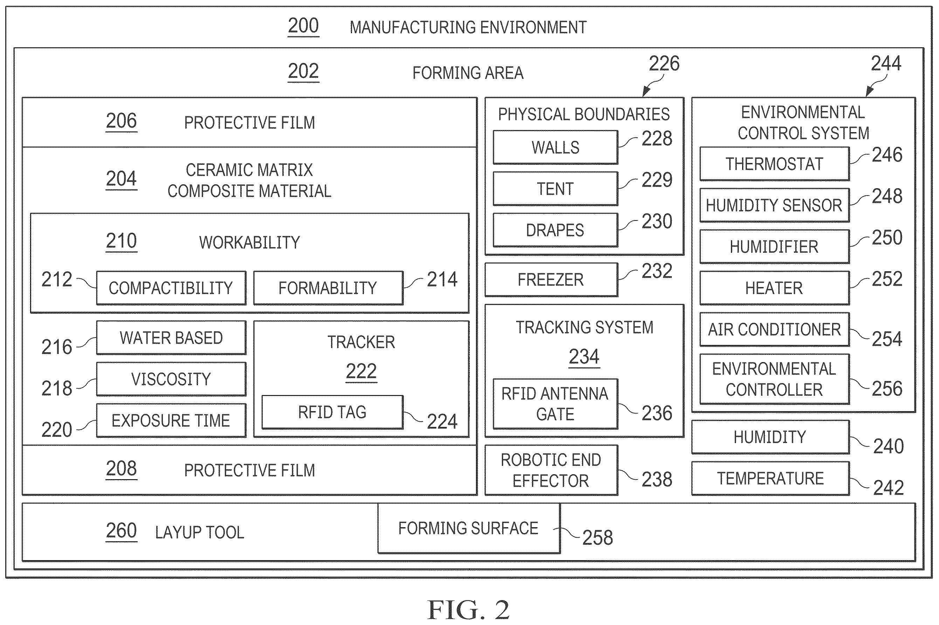

Turning now to **Figure 2****,** an illustration of a block diagram of a manufacturing environment is depicted in accordance with an illustrative example. Manufacturing environment **200** comprises forming area **202** for automated composite processing. Composite components of aircraft **100** can be formed in forming area **202** of **Figure 2****.**

Forming area **202** comprises physical boundaries **226** defining and enclosing forming area **202,** humidity sensor **248** configured to detect humidity **240** in forming area **202,** thermostat **246** configured to detect temperature **242** in forming area **202,** and environmental controller **256** configured to perform at least one of activating or deactivating heater **252** or humidifier **250** based on data received from humidity sensor **248** and thermostat **246.** Physical boundaries **226** are configured to substantially reduce transmission of temperature **242** and humidity **240** from forming area **202.** Ceramic matrix composite material **204** will be peeled, placed, and formed within forming area **202** by robotic end effector **238.**

Physical boundaries **226** can take any desirable form. In some illustrative examples, physical boundaries **226** are present to restrict entry into forming area **202.** In some illustrative examples, physical boundaries **226** are present to indicate an automated processing area. In some illustrative examples physical boundaries **226** are present to maintain humidity **240** and temperature **242** separately from the environment of manufacturing environment **200.** Physical boundaries **226** can be selected from at least one of walls **228,** tent **229,** or drapes **230.** Physical boundaries **226** are configured to substantially reduce transmission of temperature **242** and humidity **240** from forming area **202.**

The outer containment provided by physical boundaries **226** permits control of the pick and place and forming CMC operations. In some illustrative examples, physical boundaries **226** are insulated. In other illustrative examples, physical boundaries **226** are not insulated. In some illustrative examples, human operators are present in forming area **202.** In other illustrative examples, human operators are not present in forming area **202.**

Ceramic matrix composite material **204** is water based **216.** Water based **216** ceramic matrix composite material **204** is sensitive to humidity **240,** temperature **242,** and exposure time **220** to forming area **202** out of freezer **232.** Environmental control system **244** is used to control at least one of temperature **242** or humidity **240** for workability **210** of ceramic matrix composite material **204.**

Ceramic matrix composite material **204** has protective film **206** on a first side and protective film **208** on an opposite side. In some illustrative examples, the sides may be referred to as a front side and a backside. In some illustrative examples, protective film **206** and protective film **208** are referred to as a front side protective film and a back side protective film.

Workability **210** of ceramic matrix composite material **204** is influenced by humidity **240** and temperature **242** of forming area **202.** Workability **210** comprises compactibility **212** and formability **214.** Workability **210** is influenced by viscosity **218** of ceramic matrix composite material **204.**

Freezer **232** is configured to store ceramic matrix composite material **204** in forming area **202.** Ceramic matrix composite material **204** is removed from freezer **232** and allowed to thaw to decrease viscosity **218** of the matrix in ceramic matrix composite material **204.** After being removed from freezer **232,** at least one of protective film **206** or protective film **208** is removed from ceramic matrix composite material **204.** Afterwards, ceramic matrix composite material **204** is placed onto forming surface **258** on layup tool **260.**

Environmental control system **244** controls at least one of humidity **240** and temperature **242** within forming area **202** for a peeling operation and a pick and place and forming operation. Environmental control system **244** is an environmentally controlled automation cell within the humidity and temperature containing environment cell, forming area **202,** within manufacturing environment **200.** At least one of temperature **242** or humidity **240** are controlled within humidity and temperature containing physical boundaries **226.** Air or other desirable gases can be present within the enclosure formed by physical boundaries **226.**

By monitoring and adjusting humidity **240** and temperature **242,** reliability of automated film peeling and formability of ceramic matrix composite material **204** is improved. In some illustrative examples, working temperature is approximately 21 degrees Celsius (approximately 70 degrees Fahrenheit) and approximately 65% humidity. It is difficult to form and work ceramic matrix composite material **204** when it dries out and is not maintained at approximately 60% humidity and the desired temperature range. Temperature **242** and humidity **240** is monitored by environmental control system **244,** and work is only performed when values of temperature **242** and humidity **240** are within predetermined range.

In some illustrative examples, a type of ceramic matrix composite material **204** is used to determine the predetermined ranges for temperature **242** and humidity **240.** In some illustrative examples, environmental control system **244** maintains temperature **242** and humidity **240** within predetermined range for the type of ceramic matrix composite material **204.**

In some other illustrative examples, environmental control system **244** maintains temperature **242** and humidity **240** based on type of ceramic matrix composite material **204** as well as exposure time **220.** Exposure time **220** is determined based on when ceramic matrix composite material **204** is removed from freezer **232.**

Tracking system **234** can be used to determine exposure time **220.** Tracking system **234** can use RFID monitors or other desirable means on ceramic matrix composite material **204** to track how long ceramic matrix composite material **204** is out of freezer **232.** Environmental control system **244** can be used to monitor the environment ceramic matrix composite material **204** is exposed to while out of freezer **232.**

The illustrative examples can track and trace to monitor how long ceramic matrix composite material **204** is out of freezer **232.** In some illustrative examples, tracking system **234** is an RFID based tracking system. Environmental control system **244** can adjust at least one of temperature **242** or humidity **240** to improve at least one of compaction of ceramic matrix composite material **204** on forming surface **258** or peeling and removal of protective film **206** and protective film **208.** In these illustrative examples, at least one of humidity **240** or temperature **242** is controlled to improve viscosity **218** of the matrix dependent on the amount of time ceramic matrix composite material **204** is out of freezer **232.** Compaction and peeling of protective films, protective film **206** and protective film **208,** can be improved by customizing temperature **242** and humidity **240** based on exposure time **220.**

Tracker **222** is associated with ceramic matrix composite material **204** to track ceramic matrix composite material **204** within forming area **202.** In some illustrative examples, tracker **222** takes the form of RFID tag **224.** When multiple ceramic matrix composite materials are present in forming area **202,** a unique RFID tag can be associated with each material kit.

In this illustrative example, RFID antenna gate **236** monitors ceramic matrix composite material **204** as it is removed/placed in freezer **232.** Time in/out of freezer **232** for ceramic matrix composite material **204** is recorded in a database. When more than one ceramic matrix composite material **204** is present in forming area **202,** the time in/out of freezer **232** is recorded for each material kit.

Tracking system **234** is configured to document a time a composite material is exposed to humidity **240** and temperature **242** in forming area **202.** For example, tracking system **234** can document a time ceramic matrix composite material **204** is exposed to humidity **240** and temperature **242** in forming area **202.** In some illustrative examples, more than one ceramic matrix composite material is present in forming area **202.** In these illustrative examples, each ceramic matrix composite material can be tracked separately within forming area **202.** In some illustrative examples, a ceramic matrix composite material out of freezer **232** longest takes priority for environmental control system **244.** In other illustrative examples, a ceramic matrix composite material about to be placed on forming surface **258** takes priority for environmental control system **244.**

Tracker **222** is attached to ceramic matrix composite material **204** for tracking ceramic matrix composite material **204** in forming area **202.** Tracker **222** can be used to determine exposure time **220** of ceramic matrix composite material **204.** As depicted, tracking system **234** in forming area **202** comprises RFID antenna gate **236** and RFID tag **224.**

Robotic end effector **238** in forming area **202** is configured to pick and place ceramic matrix composite material **204** in forming area **202.** In some illustrative examples, robotic end effector **238** is configured to remove at least one of protective film **206** or protective film **208.** Robotic end effector **238** can place ceramic matrix composite material **204** onto forming surface **258** of layup tool **260.**

In some illustrative examples, forming area **202** further comprises air conditioner **254.** Air conditioner **254** can be used to control both temperature **242** and humidity **240.**

Robotic end effector **238** can be used to form ceramic matrix composite material **204** against forming surface **258** of layup tool **260.** By robotic end effector **238** peeling and forming ceramic matrix composite material **204** against layup tool **260,** operations are automated within forming area **202.**

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, more than one robotic end effector can be present in forming area **202.** In some illustrative examples, separate robotic end effectors perform independent manufacturing steps. In some illustrative examples, separate robotic end effectors are used to peel protective films and form ceramic matrix composite material **204** against forming surface **258.**

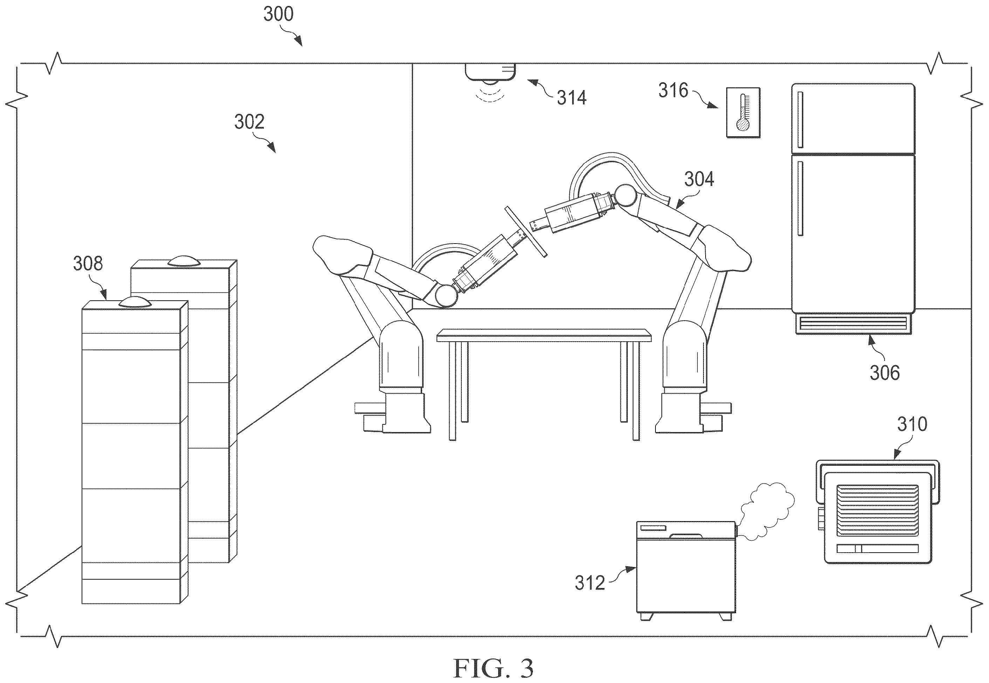

Turning now to **Figure 3****,** an illustration of a forming area is depicted in accordance with an illustrative example. Forming area **300** is a physical implementation of forming area **202** of **Figure 2****.** Forming area **300** comprises physical boundaries **302.** In this illustrative example, physical boundaries **302** comprise a tent configured to contain robotic end effectors **304.** Robotic end effectors **304** are configured to form composite material against a layup tool. In some illustrative examples, the composite material is stored in freezer **306.** After removal from freezer **306,** the composite material is passed through RFID antenna gate **308** to monitor the time out of the composite material.

Forming area **300** comprises physical boundaries **302** defining and enclosing forming area **300,** humidity sensor **314** configured to detect humidity in forming area **300,** thermostat **316** configured to detect temperature in forming area **300,** heater **310,** humidifier **312,** and an environmental controller (not depicted) configured to perform at least one of activating or deactivating heater **310** or humidifier **312** based on data received from humidity sensor **314** and thermostat **316.** A ceramic matrix composite material can be peeled and formed within forming area **300** by robotic end effectors **304.**

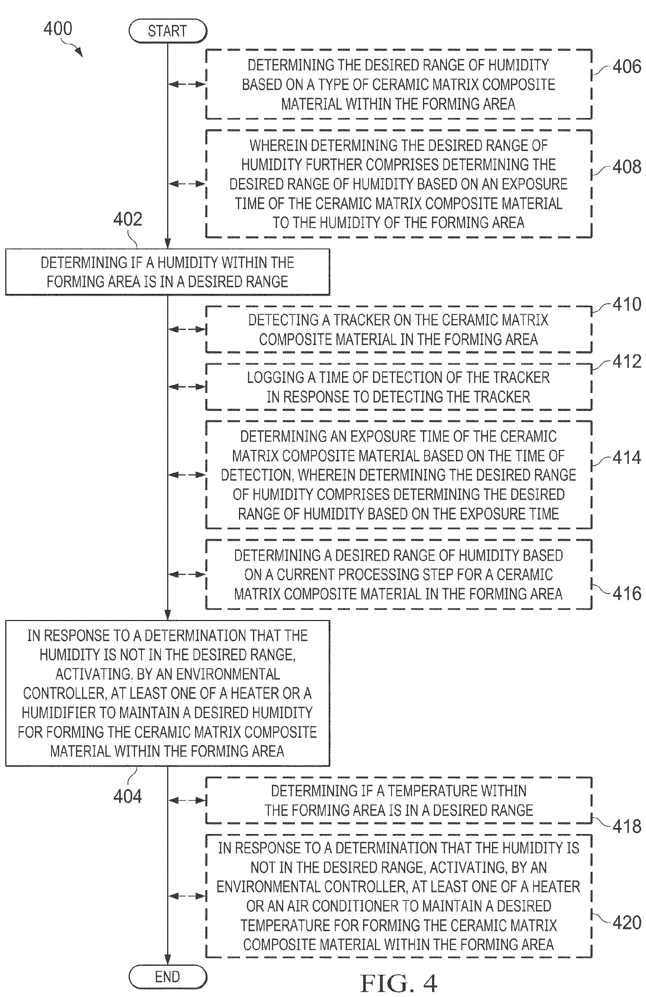

Turning now to **Figure 4****,** a flowchart of a method of maintaining workability of a ceramic matrix composite material in a forming area is depicted in accordance with an illustrative example. Method **400** can be used to maintain workability of a ceramic matrix composite material for forming a component of aircraft **100** of **Figure 1****.** Method **400** can be implemented within forming area **202** of **Figure 2****.** Method **400** can be implemented within forming area **300** of **Figure 3****.**

Method **400** determines if a humidity within the forming area is in a desired range (operation **402).** Method **400,** in response to a determination that the humidity is not in the desired range, activates, by an environmental controller, at least one of a heater or a humidifier to maintain a desired humidity for forming the ceramic matrix composite material within the forming area (operation **404).** Afterwards, method **400** terminates.

In some illustrative examples, method **400** determines the desired range of humidity based on a type of ceramic matrix composite material within the forming area (operation **406).** In some illustrative examples, the desired range of humidity is affected by a type of matrix.

In some illustrative examples, determining the desired range of humidity further comprises determining the desired range of humidity based on an exposure time of the ceramic matrix composite material to the humidity of the forming area (operation **408).** In some illustrative examples, the desired range of humidity is determined based on an exposure time of the ceramic matrix composite material to be formed next. In some illustrative examples, the desired range of humidity is determined based on an exposure time of the ceramic matrix composite material within the forming area that has been outside of the freezer the longest.

In some illustrative examples, method **400** detects a tracker on the ceramic matrix composite material in the forming area (operation **410).** In some illustrative examples, the tracker is an RFID tracker. In other illustrative examples, the tracker can be an optical tracker.

In some illustrative examples, method **400** logs a time of detection of the tracker in response to detecting the tracker (operation **412).** In some illustrative examples, method **400** determines an exposure time of the ceramic matrix composite material based on the time of detection, wherein determining the desired range of humidity comprises determining the desired range of humidity based on the exposure time (operation **414).**

In some illustrative examples, method **400** determines a desired range of humidity based on a current processing step for a ceramic matrix composite material in the forming area (operation **416).** In some illustrative examples, the desired range of humidity is determined for peeling a protective film from the ceramic matrix composite material in the forming area. In some illustrative examples, the desired range of humidity is determined for forming the ceramic matrix composite material in the forming area. In some illustrative examples, the desired range of humidity is determined for picking and placing the ceramic matrix composite material in the forming area. In some illustrative examples, multiple composite material sheets are present in the forming area and forming is prioritized in determining the desired range of humidity in the forming area.

In some illustrative examples, method **400** determines if a temperature within the forming area is in a desired range (operation **418).** In some illustrative examples, method **400,** in response to a determination that the humidity is not in the desired range, activates, by an environmental controller, at least one of a heater or an air conditioner to maintain a desired temperature for forming the ceramic matrix composite material within the forming area (operation **420).**

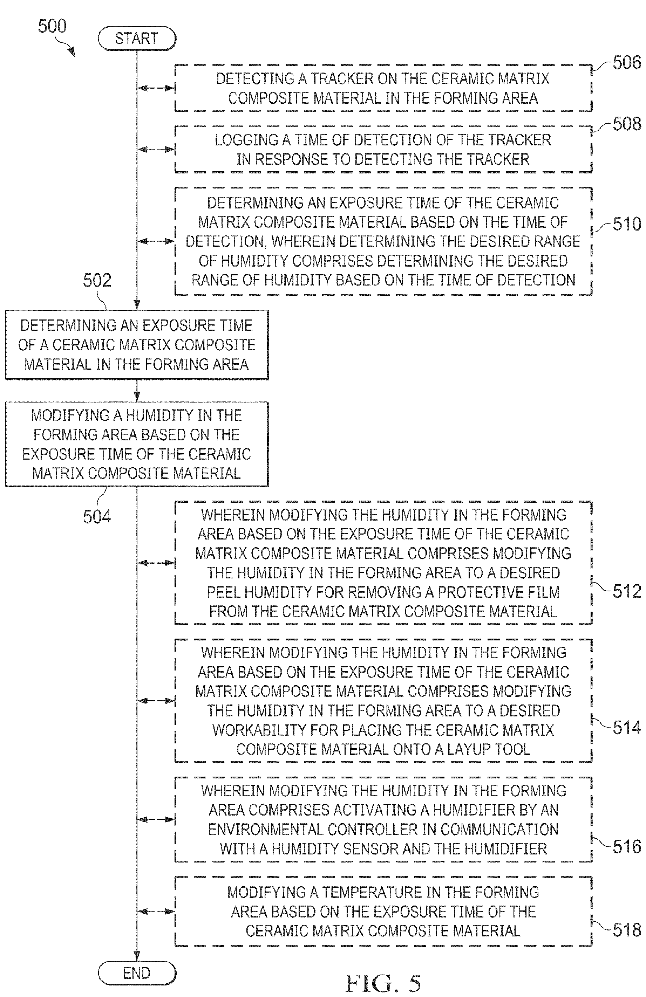

Turning now to **Figure 5****,** a flowchart of a method of maintaining workability of a ceramic matrix composite material in a forming area is depicted in accordance with an illustrative example. Method **500** can be used to maintain workability of a ceramic matrix composite material for forming a component of aircraft **100 of** **Figure 1****.** Method **500** can be implemented within forming area **202 of** **Figure 2****.** Method **500** can be implemented within forming area **300 of** **Figure 3****.**

Method **500** determines an exposure time of a ceramic matrix composite material in the forming area (operation **502).** Method **500** modifies a humidity in the forming area based on the exposure time of the ceramic matrix composite material (operation **504).** Afterwards, method **500** terminates.

In some illustrative examples, method **500** detects a tracker on the ceramic matrix composite material in the forming area (operation **506).**

In some illustrative examples, method **500** logs a time of detection of the tracker in response to detecting the tracker (operation **508).** In some illustrative examples, method **500** determines an exposure time of the ceramic matrix composite material based on the time of detection, wherein determining the desired range of humidity comprises determining the desired range of humidity based on the time of detection (operation **510).**

In some illustrative examples, modifying the humidity in the forming area based on the exposure time of the ceramic matrix composite material comprises modifying the humidity in the forming area to a desired peel humidity for removing a protective film from the ceramic matrix composite material (operation **512).** In some illustrative examples, modifying the humidity in the forming area based on the exposure time of the ceramic matrix composite material comprises modifying the humidity in the forming area to a desired workability for placing the ceramic matrix composite material onto a layup tool (operation **514).**

In some illustrative examples, modifying the humidity in the forming area comprises activating a humidifier by an environmental controller in communication with a humidity sensor and the humidifier (operation **516).** In some illustrative examples, modifying the humidity in the forming area comprises activating a dehumidifier by an environmental controller in communication with a humidity sensor and the dehumidifier.

In some illustrative examples, method **500** modifies a temperature in the forming area based on the exposure time of the ceramic matrix composite material (operation **518).** In some illustrative examples, the temperature is modified by activating or deactivating a heater. In some illustrative examples, the temperature is modified by activating or deactivating an air conditioner.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, any of operation **406** through operation **420** may be optional. As another example, any of operation **506** through operation **518** may be optional.

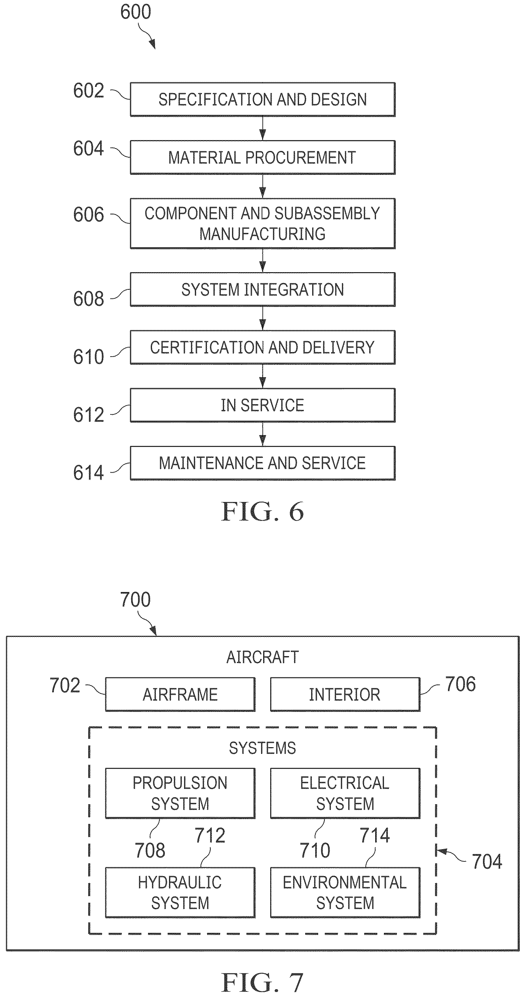

Illustrative examples of the present disclosure may be described in the context of aircraft manufacturing and service method **600** as shown in **Figure 6** and aircraft **700** as shown in **Figure 7****.** Turning first to **Figure 6****,** an illustration of an aircraft manufacturing and service method in a form of a block diagram is depicted in accordance with an illustrative example. During pre-production, aircraft manufacturing and service method **600** may include specification and design **602** of aircraft **700 in** **Figure 7** and material procurement **604.**

During production, component and subassembly manufacturing **606** and system integration **608** of aircraft **700** takes place. Thereafter, aircraft **700** may go through certification and delivery **610** in order to be placed in service **612.** While in service **612** by a customer, aircraft **700** is scheduled for routine maintenance and service **614,** which may include modification, reconfiguration, refurbishment, or other maintenance and service.

Each of the processes of aircraft manufacturing and service method **600** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 7****,** an illustration of an aircraft in a form of a block diagram is depicted in which an illustrative example may be implemented. In this example, aircraft **700** is produced by aircraft manufacturing and service method **600** of **Figure 6** and may include airframe **702** with plurality of systems **704** and interior **706.** Examples of systems **704** include one or more of propulsion system **708,** electrical system **710,** hydraulic system **712,** and environmental system **714.** Any number of other systems may be included.

Apparatuses and methods embodied herein may be employed during at least one of the stages of aircraft manufacturing and service method **600.** One or more illustrative examples may be manufactured or used during at least one of component and subassembly manufacturing **606,** system integration **608,** in service **612,** or maintenance and service **614** of **Figure 6****.**

The illustrative examples control at least one of the humidity and the temperature within a forming area in which a pick and place forming operation is performed. The illustrative examples present an environmentally controlled automation cell within a humidity and temperature containing environment, such as a tent enclosure, within the manufacturing environment. The illustrative examples provide an outer containment to permit control of the pick and place and forming CMC operations. The outer containment can comprise physical boundaries such as at least one of walls, a tent, or drapes.

The illustrative examples utilize tracking, such as RFID monitors or other means, on the CMC material to track how long out of the freezer and track the environment it was exposed to while out of the freezer. The illustrative examples track and trace to monitor how long the material is out of the freezer (for example, using a RFID based tracking system), and adjust temperature and humidity to improve compaction and peeling of top and bottom protective film removal. RFID antenna gate monitors material as it is removed/placed in freezer. Time in/out of freezer for each material-kit is recorded in database.

The illustrative examples control at least one of the temperature or the humidity within the humidity and temperature containing forming area within the physical boundaries. In the illustrative examples, air or other gas is present within the physical boundaries.

CMC material is removed from a freezer and allowed to thaw to decrease matrix viscosity. In some illustrative examples, a working temperature is about 21 degrees Celsius (about 70 degrees Fahrenheit) and about 65% humidity without modifying for exposure time. The illustrative examples recognize and take into account that it is difficult to form and work the CMC composite when it dries out and is not maintained at at least 60% humidity and the desired temperature range. Temperature and humidity are monitored by PLC, work is only performed when values are within a predetermined range.

By the illustrative examples monitoring and adjusting the humidity and temperature, reliability of automated film peeling and formability of material is improved. The illustrative examples provide a closed loop humidity and temperature control for at least one of improved usable-life, compactability, formability, or protective film removal within the physical boundaries of the forming area. The illustrative examples control at least one of the humidity or the temperature to control the viscosity of the matrix dependent on the amount of time the material is out of freezer. Compaction and peeling of protective films are improved by customizing the environment based on out time of material.

Water-based Ceramic Matrix Composite material is extremely sensitive to humidity, temperature, and time of exposure to the environment (out of freezer). The illustrative examples track and trace to monitor how long the material is out of the freezer. The illustrative examples can use an RFID based tracking system. The illustrative examples adjust at least one of temperature or humidity to improve compaction and peeling of top and bottom protective film removal. The illustrative examples provide better material performance and less wasted material.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure further includes the following clauses:

### CLAUSES

1. A forming area (202, 300) for automated composite processing comprising:
   physical boundaries (226, 302) defining and enclosing the forming area (202, 300), the physical boundaries (226, 302) configured to substantially reduce transmission of a temperature (242) and a humidity (240) from the forming area;
   a humidity sensor (248, 314) configured to detect the humidity (240) in the forming area (202, 300);
   a thermostat (246, 316) configured to detect the temperature (242) in the forming area (202, 300);
      and
   an environmental controller (256) configured to perform at least one of activating or deactivating a heater (252, 310) or a humidifier (250) based on data received from the humidity sensor (248, 314) and the thermostat (246, 316).
2. The forming area (202, 300) of clause 1, further comprising:
   a tracking system (234) configured to document a time a ceramic matrix composite material (204) is exposed to the humidity (240) and temperature (242) in the forming area (202, 300).
3. The forming area (202, 300) of clause 2, wherein the tracking system (234) comprises a RFID antenna gate (236) and a RFID tag (224).
4. The forming area (202, 300) of any one of the preceding clauses, further comprising:
   a robotic end effector (238, 304) configured to pick and place a ceramic matrix composite material (204) in the forming area (202, 300).
5. The forming area (202, 300) of any one of the preceding clauses, further comprising:
   a freezer (232) configured to store ceramic matrix composite material (204) in the forming area (202, 300).
6. The forming area (202, 300) of any one of the preceding clauses, further comprising:
   a heater (252, 310); and
   a humidifier (250).
7. The forming area (202, 300) of any one of the preceding clauses, wherein the physical boundaries (226, 302) comprise at least one of walls (228), drapes (230), or a tent (229).
8. The forming area (202, 300) of any one of the preceding clauses, further comprising an air conditioner (254).
9. A method (400) of maintaining workability (210) of a ceramic matrix composite material (204) in a forming area (202, 300) comprising:
   determining (402) if a humidity (240) within the forming area (202, 300) is in a desired range; and
   in response (404) to a determination that the humidity (240) is not in the desired range, activating, by an environmental controller (256), at least one of a heater (252, 310) or a humidifier (250) to maintain a desired humidity for forming the ceramic matrix composite material (204) within the forming area (202, 300).
10. The method (400) of clause 9, further comprising:
   determining (418) if a temperature (242) within the forming area (202, 300) is in a desired range; and
   in response (420) to a determination that the temperature (242) is not in the desired range, activating, by an environmental controller (256), at least one of a heater (252, 310) or an air conditioner (254) in the forming area (202, 300) to maintain a desired temperature (242) for forming the ceramic matrix composite material (204) within the forming area (202, 300).
11. The method (400) of clause 9 or 10, further comprising:
   determining (406) the desired range of humidity based on a type of ceramic matrix composite material (204) within the forming area (202, 300).
12. The method (400) of clause 11, wherein (408) determining the desired range of humidity further comprises determining the desired range of humidity based on an exposure time (220) of the ceramic matrix composite material (204) to the humidity (240) of the forming area (202, 300).
13. The method (400) of clause 11 or 12, further comprising:
   detecting (410) a tracker (222) on the ceramic matrix composite material (204) in the forming area (202, 300); and
   logging (412) a time of detection of the tracker (222) in response to detecting the tracker (222).
14. The method (400) of clause 13, further comprising:
   determining (414) an exposure time (220) of the ceramic matrix composite material (204) based on the time of detection, wherein determining the desired range of humidity comprises determining the desired range of humidity based on the exposure time (220).
15. The method (400) of any one of clauses 9-14, further comprising:
   determining (416) a desired range of humidity based on a current processing step for a ceramic matrix composite material (204) in the forming area (202, 300).
16. A method (500) of maintaining workability (210) of a ceramic matrix composite material (204) in a forming area (202, 300) comprising:
   determining (502) an exposure time (220) of a ceramic matrix composite material (204) in the forming area (202, 300); and
   modifying (504) a humidity (240) in the forming area (202, 300) based on the exposure time (220) of the ceramic matrix composite material (204).
17. The method (500) of clause 16, wherein (512) modifying the humidity (240) in the forming area (202, 300) based on the exposure time (220) of the ceramic matrix composite material (204) comprises modifying the humidity (240) in the forming area (202, 300) to a desired peel humidity for removing a protective film (206 or 208) from the ceramic matrix composite material (204).
18. The method (500) of clause 16 or 17, wherein (514) modifying the humidity (240) in the forming area (202, 300) based on the exposure time (220) of the ceramic matrix composite material (204) comprises modifying the humidity (240) in the forming area (202, 300) to a desired workability (210) for placing the ceramic matrix composite material (204) onto a layup tool.
19. The method (500) of any one of clauses 16-18, wherein (516) modifying the humidity (240) in the forming area (202, 300) comprises activating a humidifier (250) by an environmental controller (256) in communication with a humidity sensor (248, 314) and the humidifier (250).
20. The method (500) of any one of clauses 16-19, further comprising:
   modifying (518) a temperature (242) in the forming area (202, 300) based on the exposure time (220) of the ceramic matrix composite material (204).
21. The method (500) of any one of clauses 16-20,further comprising:
   detecting (506) a tracker (222) on the ceramic matrix composite material (204) in the forming area (202, 300);
   logging (508) a time of detection of the tracker (222) in response to detecting the tracker (222); and
   determining (510) an exposure time (220) of the ceramic matrix composite material (204) based on the time of detection, wherein determining the desired range of humidity comprises determining the desired range of humidity based on the exposure time.

## Claims

1. A forming area (202, 300) for automated composite processing comprising:
physical boundaries (226, 302) defining and enclosing the forming area (202, 300), the physical boundaries (226, 302) configured to substantially reduce transmission of a temperature (242) and a humidity (240) from the forming area;
a humidity sensor (248, 314) configured to detect the humidity (240) in the forming area (202, 300);
a thermostat (246, 316) configured to detect the temperature (242) in the forming area (202, 300);
and
an environmental controller (256) configured to perform at least one of activating or deactivating a heater (252, 310) or a humidifier (250) based on data received from the humidity sensor (248, 314) and the thermostat (246, 316).

2. The forming area (202, 300) of claim 1, further comprising:
a tracking system (234) configured to document a time a ceramic matrix composite material (204) is exposed to the humidity (240) and temperature (242) in the forming area (202, 300), preferably wherein the tracking system (234) comprises a RFID antenna gate (236) and a RFID tag (224).

3. The forming area (202, 300) of any one of the preceding claims, further comprising:
a robotic end effector (238, 304) configured to pick and place a ceramic matrix composite material (204) in the forming area (202, 300).

4. The forming area (202, 300) of any one of the preceding claims, further comprising:
a freezer (232) configured to store ceramic matrix composite material (204) in the forming area (202, 300); and/or
a heater (252, 310), and a humidifier (250); and/or an air conditioner (254).

5. The forming area (202, 300) of any one of the preceding claims, wherein the physical boundaries (226, 302) comprise at least one of walls (228), drapes (230), or a tent (229).

6. A method (400) of maintaining workability (210) of a ceramic matrix composite material (204) in a forming area (202, 300) comprising:
determining (402) if a humidity (240) within the forming area (202, 300) is in a desired range; and
in response (404) to a determination that the humidity (240) is not in the desired range, activating, by an environmental controller (256), at least one of a heater (252, 310) or a humidifier (250) to maintain a desired humidity for forming the ceramic matrix composite material (204) within the forming area (202, 300).

7. The method (400) of claim 6, further comprising:
determining (418) if a temperature (242) within the forming area (202, 300) is in a desired range; and
in response (420) to a determination that the temperature (242) is not in the desired range, activating, by the environmental controller (256), at least one of a heater (252, 310) or an air conditioner (254) in the forming area (202, 300) to maintain a desired temperature (242) for forming the ceramic matrix composite material (204) within the forming area (202, 300).

8. The method (400) of claim 6 or 7, further comprising:
determining (406) the desired range of humidity based on a type of ceramic matrix composite material (204) within the forming area (202, 300).

9. The method (400) of claim 8, wherein (408) determining the desired range of humidity further comprises determining the desired range of humidity based on an exposure time (220) of the ceramic matrix composite material (204) to the humidity (240) of the forming area (202, 300).

10. The method (400) of claim 8 or 9, further comprising:
detecting (410) a tracker (222) on the ceramic matrix composite material (204) in the forming area (202, 300); and
logging (412) a time of detection of the tracker (222) in response to detecting the tracker (222); and preferably:
determining (414) an exposure time (220) of the ceramic matrix composite material (204) based on the time of detection, wherein determining the desired range of humidity comprises determining the desired range of humidity based on the exposure time (220).

11. The method (400) of any one of claims 6-10, further comprising:
determining (416) a desired range of humidity based on a current processing step for a ceramic matrix composite material (204) in the forming area (202, 300).

12. A method (500) of maintaining workability (210) of a ceramic matrix composite material (204) in a forming area (202, 300) comprising:
determining (502) an exposure time (220) of a ceramic matrix composite material (204) in the forming area (202, 300); and
modifying (504) a humidity (240) in the forming area (202, 300) based on the exposure time (220) of the ceramic matrix composite material (204).

13. The method (500) of claim 12, wherein:
(512) modifying the humidity (240) in the forming area (202, 300) based on the exposure time (220) of the ceramic matrix composite material (204) comprises modifying the humidity (240) in the forming area (202, 300) to a desired peel humidity for removing a protective film (206 or 208) from the ceramic matrix composite material (204); and/or
(514) modifying the humidity (240) in the forming area (202, 300) based on the exposure time (220) of the ceramic matrix composite material (204) comprises modifying the humidity (240) in the forming area (202, 300) to a desired workability (210) for placing the ceramic matrix composite material (204) onto a layup tool; and/or
(516) modifying the humidity (240) in the forming area (202, 300) comprises activating a humidifier (250) by an environmental controller (256) in communication with a humidity sensor (248, 314) and the humidifier (250).

14. The method (500) of any one of claims 12-13, further comprising:
modifying (518) a temperature (242) in the forming area (202, 300) based on the exposure time (220) of the ceramic matrix composite material (204).

15. The method (500) of any one of claims 12-14, further comprising:
detecting (506) a tracker (222) on the ceramic matrix composite material (204) in the forming area (202, 300);
logging (508) a time of detection of the tracker (222) in response to detecting the tracker (222); and
determining (510) an exposure time (220) of the ceramic matrix composite material (204) based on the time of detection, wherein determining the desired range of humidity comprises determining the desired range of humidity based on the exposure time.
